# FASCICULE DE BREVET EUROPEEN

(11) **EP 1 614 023 B1**
(45) Date de publication et mention de la délivrance du brevet: **04.08.2010**
(21) Numéro de dépôt: 04727015.2
(22) Date de dépôt: 13.04.2004
(51) Int. Cl.: G06F 3/033

(54) **DISPOSITIF DE D TECTION DE POSITION**
POSITIONSDETEKTIONSEINRICHTUNG
POSITION DETECTION DEVICE

(30) Priorité: 16.04.2003 EP 03101043
(43) Date de publication de la demande: 11.01.2006
(73) Titulaire: IEE INTERNATIONAL ELECTRONICS & ENGINEERING S.A., 6468 Echternach (LU)
(72) Inventeur: SERBAN, Bogdan, L-3376 Leudelange (LU)
(74) Mandataire: Office Freylinger
(86) Numéro de dépôt international: PCT/EP2004/050511
(87) Numéro de publication internationale: WO 2004/092940

(56) Documents cités:
- US-A- 3 806 912
- US-A- 4 571 577
- US-A- 4 810 992
- US-A- 5 159 159

## Description

### Introduction

La présente invention concerne généralement un dispositif de détection d'une position d'action d'une force et le cas échéant de l'intensité de cette force.

Un dispositif de détection d'une position d'action est décrit dans le document US 3,806,912. Ce dispositif comprend une pluralité de résistances ohmiques arrangées en parallèle sur un substrat de manière à s'étendre à travers de la surface active du détecteur et reliées sur un côté à une première piste conductrice s'étendant perpendiculairement aux résistances ohmiques. Deux groupes de conducteurs électriques sont arrangés en alternance avec les résistances ohmiques sur le substrat de manière à s'étendre à travers de la surface active du détecteur. Les conducteurs du premier groupe de conducteurs électriques sont reliés à une piste résistive, qui s'étend le long de la surface active du détecteur dans une direction perpendiculaire à celle des résistances de la pluralité de résistances ohmiques. Les conducteurs du deuxième groupe de conducteurs électriques sont reliés entre elles et connectées à un circuit de détection. La piste conductrice et la piste résistive sont reliées via des diodes au potentiel de masse de telle sorte qu'en alimentant les conducteurs du deuxième groupe de conducteurs électriques par un signal alternatif, on peut mesurer, selon la phase du signal d'alimentation, soit la pluralité des résistances soit la piste résistive afin de déterminer la position d'un activateur établissant un contact électrique local entre les différents résistances et conducteurs.

Il est aussi connu de construire des dispositifs de détection d'une position d'action d'une force, à partir de commutateurs du type à feuille. Un commutateur du type à feuille comporte deux feuilles de support, qui sont arrangées à une certaine distance l'une de l'autre à l'aide d'un écarteur. L'écarteur comprend au moins un évidemment qui définit une zone active du commutateur dans laquelle les deux feuilles de support se font face. A l'intérieur de cette zone active, au moins deux électrodes sont arrangées de telle manière sur les deux feuilles de support, qu'un contact électrique est établi entre les électrodes lorsque les deux feuilles de support sont pressées ensemble sous l'effet d'une force agissant sur le commutateur.

Selon les applications, une couche en matière semi-conductrice peut être disposée entre les électrodes, de telle sorte que le commutateur montre un comportement sensible à la pression, c'est à dire que sa résistance varie en fonction de la force appliquée. Le caractère variable de la résistance électrique de tels commutateurs, qui sont connus sous le nom "Force Sensing Resistors", permet d'utiliser ces commutateurs comme des capteurs de pression. La couche en matière semi-conductrice peut comprendre soit une matière dont la résistance électrique interne varie en fonction d'une compression ou d'une déformation de la couche soit une matière dont la structuration de la surface confère à la couche une certaine résistance superficielle qui, lorsque la couche est appliquée contre une surface conductrice de l'électrode peut être réduite par suite d'une augmentation du nombre de points de contact avec cette surface conductrice sous l'effet d'une pression localisée.

Au moyen de cette technologie des capteurs de pression du type à feuilles, des détecteurs de position comprenant une tablette digitalisante XYZ, c'est à dire un détecteur de position et d'intensité de la force, ont été présentés. Ces tablettes digitalisantes utilisent des capteurs de pression configurés comme potentiomètre linéaire afin de déterminer l'endroit d'action d'une force. A cette fin, chacun des capteurs de pression comprend une résistance linéaire disposée sur un support aux bornes de laquelle on applique une tension de manière à créer un gradient de potentiel. A intervalles réguliers, des lignes conductrices s'étendant latéralement sont reliées à ladite résistance linéaire. Le curseur du potentiomètre est formé par un conducteur en forme de peigne dont les dents s'étendent entre les lignes conductrices. En court-circuitant les lignes conductrices avec les dents du conducteur à un certain endroit, le conducteur est soumis à une tension qui varie linéairement avec la position de la ligne conductrice sur la résistance linéaire. Un tel capteur de pression permet donc de déterminer la position de l'action d'une force dans la direction de la résistance linéaire.

En superposant deux de ces capteurs de force de telle manière que leurs résistances linéaires respectives soient orientées dans un angle de p.ex. 90° entre-elles, on crée un détecteur de position, qui permet d'identifier la position d'action d'une force dans un repère X-Y sur une surface. Un tel détecteur de la position d'action d'une force est p.ex. décrit dans le document US 4,810,992. Dans un tel clavier, chacun des deux capteurs de force en forme de potentiomètre nécessite trois connexions, à savoir une connexion sur chacune des deux bornes de la résistance linéaire et une connexion pour le curseur. Il en résulte qu'un tel clavier se contente d'un nombre relativement restreint de connexions avec l'extérieur, à savoir 6 connexions.

Or, comme le détecteur de position est construit en superposant deux capteurs de position unidirectionnels, ces 6 bornes sont situées sur deux substrats différents. Ce fait crée notamment des problèmes pour la connexion du détecteur de force p.ex. sur un circuit imprimé. En effet, il faut utiliser des connecteurs spéciaux afin d'assurer une connexion fiable des bornes situées sur les deux substrats. De plus, la production d'un tel capteur nécessite des tolérances sévères au moment de assemblage; afin que les deux couches soient correctement positionnées l'une par rapport à l'autre. Seulement un positionnement exact permet de garantir, que les bornes sont correctement positionnées pour permettre une connexion fiable du détecteur.

### Objet de l'invention

L'objet de la présente invention est de proposer un détecteur de position, qui ne présente pas ce désavantage.

### Description générale de l'invention

Conformément à l'invention, cet objectif est atteint par un dispositif de détection de position selon la revendication 1. Ce dispositif de détection de position, comprend
un premier substrat,
une première résistance ohmique appliquée sur ledit substrat et s'étendant le long d'une surface active dudit détecteur de position, ladite première résistance ohmique étant connectée entre une première et une deuxième borne dudit dispositif de détection de position,
une pluralité de conducteurs électriques, lesdits conducteurs électriques étant connectés à la première résistance ohmique en des endroits distincts de celle-ci et lesdits conducteurs électriques s'étendant de la première résistance ohmique à l'intérieur de la surface active, et
une pluralité d'éléments conducteurs, lesdits éléments conducteurs étant arrangés, à l'intérieur de ladite surface active, en alternance entre lesdits premiers conducteurs électriques, une première extrémité desdits éléments conducteurs étant reliés à une troisième borne dudit dispositif de détection de position. Conformément à l'invention, lesdits éléments conducteurs sont configurés comme résistance ohmique s'étendant à travers la surface active du dispositif et en ce qu'une deuxième extrémité desdits éléments conducteurs est reliée à une quatrième borne dudit dispositif de détection de position.

Dans le dispositif de détection de position selon l'invention, les conducteurs et résistances nécessaire pour détecter une position dans les deux directions d'un plan sont intégrés sur un seul substrat. Un deuxième substrat, qui serait placé en face des conducteurs et résistances, ne doit contenir qu'une couche d'activation adaptée à contacter les conducteurs électriques et éléments conducteurs localement à l'endroit de l'action d'une force sur le détecteur de position.

Lorsqu'une force agit dans la surface active du détecteur sur un deuxième substrat, la couche d'activation est localement pressé contre les structure de conducteurs électriques et éléments conducteurs. Ainsi, au moins un conducteur électrique est contacté avec un élément conducteur voisin via la couche d'activation.

En appliquant une tension électrique entre la première et la deuxième borne, c'est à dire aux bornes de la première résistance ohmique, cet élément conducteur est soumise à une tension qui est fonction du gradient de potentiel crée à travers la résistance ohmique et donc de la position d'action de la force dans la direction définie par la résistance ohmique. Cette tension peut être ensuite mesurée sur les troisième et quatrième bornes, qui sont de préférence branchés ensemble dans ce mode de fonctionnement.

Dans une deuxième étape, on applique une tension électrique entre la troisième et la quatrième borne de sorte à créer un gradient de potentiel à travers les éléments conducteurs configurés sous forme de résistances ohmiques. Le conducteur électrique contacté à l'endroit d'action de la force est donc soumis à une tension électrique qui dépend de la position d'action de la force dans la direction définie par les éléments conducteurs. Cette tension peut à son tour être mesurée sur les première et deuxième bornes.

En alternant les mesures dans les deux sens, on peut ainsi facilement détecter la position d'action d'une force dans le plan défini par les deux directions des résistances ohmiques et donc déterminer les coordonnées X-Y de l'action d'une force. Il est donc désormais possible, de déterminer les coordonnées X et Y du point d'action d'une force avec un détecteur de position, qui ne nécessite plus que 4 bornes afin de le relier à un circuit d'évaluation associé. Il en résulte que la connexion du détecteur de position est considérablement simplifiée.

De plus, toutes les bornes électriques du détecteur nécessaires à sa connexion sont situées sur un seul substrat, ce qui facilite considérablement le raccordement du détecteur notamment sur un circuit imprimé. En effet, il est dès lors possible d'utiliser des connecteurs de sertissage standards pour assurer un contact fiable entre le détecteur de position et un circuit d'évaluation associé.

En outre, le fait que toutes les bornes soient arrangées sur un seul substrat réduit les coûts de production du détecteur de position. En effet, comme un deuxième substrat ne contient plus que la couche d'activation, les tolérances à l'assemblage au laminage des deux substrats sont beaucoup moins strictes que pour les détecteurs de position classiques. Dès lors, la fabrication de produits qui ne correspondent pas aux spécifications est par considérablement réduite. Les tolérances de positionnement des différentes bornes dépendent maintenant uniquement du procédé d'application des différents conducteurs. Cette application se fait souvent dans un procédé d'impression par sérigraphie qui est très bien maîtrisé. La précision d'impression et les tolérances très strictes y afférentes permettent même de diminuer la distance entre les différentes bornes, permettant dès lors l'utilisation de connecteurs plus petits qui présentent un écartement (pitch) plus fin.

Finalement le test des détecteurs produits est simplifié par le fait que tous les points de contact se trouvent dans un même plan.

Dans une exécution possible de l'invention, le premier substrat comprend une feuille de support élastique. Cette exécution résulte en un détecteur de position flexible. Dans une autre exécution, le premier substrat comprend une plaque de circuit imprimé. Cette dernière exécution n'est rendue possible que par l'arrangement de toutes les bornes sur un même substrat. Les conducteurs et résistances du détecteur de position, qui sert par exemple en tant que dispositif d'entrée de données tactile, peuvent donc directement être imprimés sur le circuit d'évaluation resp. d'exploitation. Une connexion ultérieure du détecteur et de son circuit associé n'est donc plus requise.

Il est à noter qu'outre la large gamme de substrats flexibles ou rigides utilisables, le présent détecteur de position peut être produit dans une large gamme de formes, adaptées à l'utilisation spécifique du détecteur. Ainsi, la surface active peut par exemple avoir une forme généralement circulaire, rectangulaire ou autre.

Dans une exécution avantageuse de l'invention, lesdits éléments conducteurs sont composés au même matériau que lesdits conducteurs électriques. Les éléments conducteurs, les conducteurs électriques et la résistance ohmique son par exemple configurés en tant que résistances à couche de carbone. La résistance spécifique des différents éléments est dans ce cas adaptée par l'épaisseur d'impression du graphite dans les différentes zones. Ainsi il est possible de produire des structures ayant des caractéristiques électriques très différentes avec un même matériau. Cette exécution présente l'avantage de limiter les matériaux utilisés dans la production des détecteurs de position et par-là de minimiser le nombre d'étapes d'impression nécessaires.

Dans un premier temps, on imprime par exemple la résistance ohmique, les conducteurs électriques s'étendant à partir de la résistance ohmique et le éléments conducteurs. Les résistances des différents éléments sont adaptées durant cette étape en variant l'épaisseur de la couche de graphite imprimée. Ensuite, on imprime dans une deuxième étape un matériau diélectrique aux endroits ou le ou les conducteurs reliant les éléments conducteurs à leurs bornes devront croiser les conducteurs électriques. Finalement, les conducteurs reliant les différents éléments à leurs bornes respectives sont imprimés dans une troisième étape d'impression. Ces conducteurs sont par exemple imprimés en argent. Par conséquent tous les éléments fonctionnels de premier substrat peuvent être fabriqués dans un procédé d'impression qui ne nécessite que trois étapes.

La couche d'activation peut comprendre une simple couche conductrice, qui permet de contacter les conducteurs électriques et les éléments conducteurs. Dans ce cas, l'intensité de la force agissant sur le détecteur de position ne peut pas être déterminée. Afin de permettre une détection aussi bien de la position d'action et de l'intensité de la force, le deuxième substrat comprend de préférence une couche en matière résistive ou semi-conductrice appliquée sur ledit deuxième substrat, qui est sensible à la pression. Ledit deuxième substrat, de préférence une feuille de support élastique, est arrangé de telle manière pardessus le premier substrat que ladite couche de matière résistive ou semi-conductrice fait face auxdits conducteurs électriques et éléments conducteurs à l'intérieur de la surface active. Dans ce cas, la résistance entre le conducteur électrique et l'élément conducteur est dépendante de l'intensité avec laquelle la couche d'activation est pressée sur les conducteurs. En mesurant cette résistance il est don possible de déterminer l'intensité de la force appliquée.

Il est à noter que le détecteur de position de la présente invention peut être utilisé pour réaliser toute sorte de dispositifs d'entrée comme par exemple des clavier, des coussins tactiles (touchpad) ou des fonctions joystick. Dans une exécution avantageuse de l'invention, le détecteur de position comprend une couche flexible de répartition de la pression, ladite couche de répartition de la pression étant appliquée sur ledit deuxième substrat. Une telle couche flexible, par exemple une couche en gomme, permet d'implémenter une fonction joystick sur une surface aussi petite que celle d'une pointe de doigt.

Il est à noter, que les couches résistives et conductrices peuvent comprendre des matériaux transparents. De même, la couche d'activation peut être fabriquée en une matière transparente. Dans ce cas, le présent détecteur est bien adapté pour une utilisation avec un écran tactile.

### Description détaillée à l'aide des figures

D'autres particularités et caractéristiques de l'invention ressortiront de la description détaillée d'un mode de réalisation avantageux présenté ci-dessous, à titre d'illustration, en référence aux figures annexées. Celles ci montrent
- Fig 1.:: une vue de la disposition des conducteurs du premier substrat d'un détecteur de position;
- Fig 2.:: une vue de la disposition des conducteurs du premier substrat d'un dispositif d'entrées de données comprenant un détecteur de position en forme de « touchpad », deux zones configurées en tant que « joystick » et une zone clavier à touches.

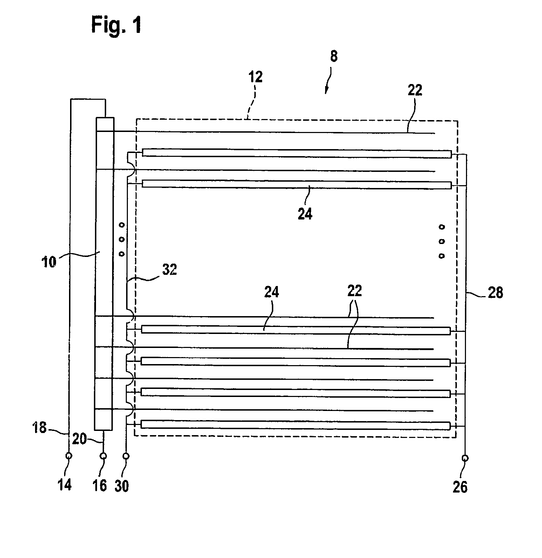

La fig. 1 montre une vue de la disposition des conducteurs du premier substrat d'un détecteur de position 8. Sur un substrat est arrangé une résistance ohmique linéaire 10, qui s'étend le long d'une surface active 12 du détecteur de position. Dans l'exécution représentée, la surface active a une forme généralement carrée. Il est cependant à noter, que d'autres formes sont possibles, par exemple ovale, circulaire, rectangulaire, etc.

La résistance ohmique 10 est connectée entre une première borne 14 et une deuxième borne 16 dudit dispositif de détection de position à l'aide de lignes conductrices 18, 20.

Une pluralité de conducteurs électriques 22 sont connectés à la première résistance ohmique 10 en des endroits distincts de celle-ci. Les conducteurs électriques 22 s'étendant de la première résistance ohmique vers l'intérieur de la surface active 12. Dans l'exécution représentée, les conducteurs 22 sont répartis de manière équidistante et s'étendent parallèlement l'un par rapport à l'autre. Il va de soi, qu'un arrangement différent de celui-ci est possible.

Une pluralité d'éléments conducteurs 24 configurés comme résistances ohmiques sont arrangés, à l'intérieur de ladite surface active 12, en alternance entre lesdits premiers conducteurs électriques 22. Une première extrémité des éléments conducteurs 24 est reliée à une troisième borne 26 dudit dispositif de détection de position via une ligne conductrice 28. Une deuxième extrémité desdits éléments conducteurs 24 est reliée à une quatrième borne 30 moyennant une ligne conductrice 32.

Du côté de la résistance ohmique 10, la ligne conductrice 32 doit croiser les conducteurs électriques 22. Afin d'éviter qu'un faux contact ne s'établisse à ces endroits, on imprime de préférence une couche d'un matériau diélectrique sur les conducteurs 22 aux endroits des croisements.

Il est à noter que la résolution du détecteur de position dépend en grand partie de la distance entre les conducteurs électriques et les éléments conducteurs voisins. En variant le nombre des conducteurs et éléments conducteurs, on peut par conséquent adapter la résolution du détecteur à son application spécifique.

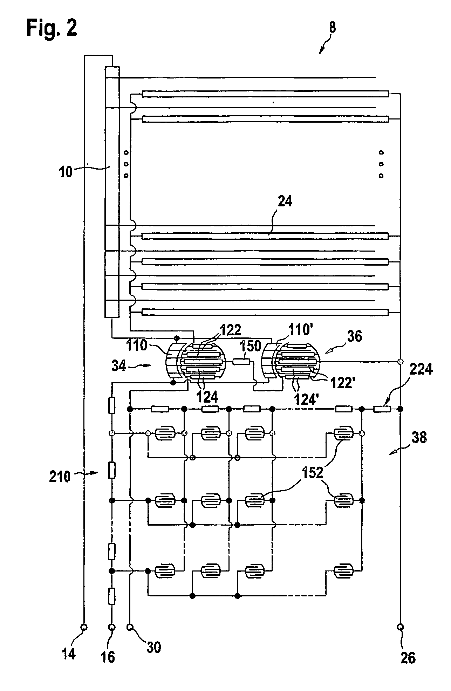

La fig. 2 montre une disposition des conducteurs du premier substrat d'un dispositif combiné d'entrée de données. Ce dispositif d'entrée de données comprend un détecteur de position 8 configuré p.ex. sous forme de « touchpad » tel que représenté sur la fig. 1, deux zones 34 et 36 configurées sous forme de « joystick » et une zone adjacente configuré en clavier à touches 38.

Les zones « joystick » 34, 36 comprennent à chaque fois une exécution d'un détecteur de position selon l'invention avec une résistance ohmique 110 et 110' qui s'étend le long d'une surface active (de forme circulaire), une pluralité de conducteurs électriques 122, 122', qui sont connectés à la résistance ohmique 110 resp. 110' en des endroits distincts de celle-ci, et une pluralité d'éléments conducteurs 124, 124' configurés comme résistances ohmiques, qui sont arrangés en alternance entre lesdits conducteurs électriques 122 et 122' respectivement. Il est à noter, que les deux résistances ohmiques 110 et 110' sont connectés en parallèle et ce montage en parallèle des deux résistances et connecté en série avec la résistance ohmique 10 entre les bornes 14 et 16 du dispositif d'entrée de données. De plus, les deux groupes d'éléments conducteurs 124 et 124' sont branchés en série via une résistance supplémentaire 150 et ce montage en série est connecté en parallèle avec les éléments conducteurs 24 entre les troisième et quatrième borne 26 et 30 du dispositif. Ainsi la combinaison du « touchpad » et des zones « joystick » est possible sans augmentation du nombre des bornes du dispositif.

Afin de configurer les zones 34 et 36 en « joystick », une couche flexible de répartition de la pression p.ex. une couche en gomme, est appliquée sur le deuxième substrat (non représenté). Une telle couche de répartition permet de changer l'endroit d'action d'une force d'activation exercée par exemple par un doigt simplement en basculant le doigt sur la zone respective.

Le clavier à touches 38 comprend une pluralité de zones discrètes d'activation 152 qui sont disposées « en matrice » en plusieurs lignes et colonnes. A chacune de ces zones d'activation peut être associé une touche active du clavier.

Chacune des zones d'activation 152 comprend deux structures d'électrodes en forme de peigne 154, 156 qui sont disposées de manière à ce que les doigts d'une des structures en forme de peigne s'intercalent à une certaine distance avec les doigts de l'autre structure. Une couche d'activation, qui peut être une simple couche conductrice ou bien une couche sensible à la pression, est arrangée sur le deuxième substrat (non représenté) de telle manière que les deux structures d'une zone d'activation sont court-circuitées par la couche d'activation lorsqu'une force agit sur le dispositif dans la région de la zone d'activation.

Afin d'identifier la zone d'activation dans laquelle une force agit, les zones d'activation sont branchées avec l'une de leurs structures d'électrodes 154 sur une première chaîne de résistances 210 et avec l'autre structure d'électrodes 156 sur une deuxième chaîne de résistances 224, la connexion étant faite en différents endroits desdites première et deuxième chaînes de résistances. En appliquant une différence de potentiel à travers la première chaîne de résistances 210 et en mesurant la tension aux bornes de la deuxième chaîne de résistances 224, on peut déterminer l'endroit du contact entre les structures d'électrodes dans la direction de la première chaîne de résistances 210 et donc la position de la touche activée. Dans une deuxième étape, on applique une différence de potentiel à travers la deuxième chaîne de résistances 224 et on mesure la tension aux bornes de la première chaîne de résistances 210 pour déterminer ainsi la position de la touche activée dans l'autre direction.

Il est à noter, que la première chaîne de résistances 210 est connectée en série avec la résistance ohmique 10 et le montage en parallèle de résistances 110 et 110' entre les deux bornes 14 et 16 du dispositif d'entrées de données. De même, la chaîne de résistances 224 est connectée en parallèle avec les éléments conducteurs 24 et le montage en série des éléments conducteurs 124 et 124' entre les bornes 26 et 30. Ainsi la combinaison du « touchpad » 8, des zones « joystick » 34 et 36 et du clavier à touches 38 est possible sans augmentation du nombre des bornes du dispositif.

Il sera apprécié par l'homme du métier que chacune des chaînes de résistances discrètes 210 et 224 peut être échangée par une résistance ohmique étendue telle que la résistance 10 sans que le fonctionnement du dispositif soit modifié.

## Revendications

1. Dispositif de détection de la position d'action d'une force (8), comprenant un premier substrat,
une première résistance ohmique (10, 110, 210) appliquée sur ledit substrat et s'étendant le long d'une surface active (12, 34, 36, 152) dudit détecteur de position, ladite première résistance ohmique (10, 110, 210) étant connectée entre une première (14) et une deuxième (16) borne dudit dispositif de détection de la position d'action d'une force (8),
une pluralité de conducteurs électriques (22, 122, 122', 154), lesdits conducteurs électriques (22, 122, 122', 154) étant connectés à la première résistance ohmique (10, 110, 210) en des endroits distincts de celle-ci et lesdits conducteurs électriques (22, 122, 122', 154) s'étendant de la première résistance ohmique (10, 110, 210) à l'intérieur de la surface active (12, 34, 36, 152), et
une pluralité d'éléments conducteurs (24, 124, 150, 224), lesdits éléments conducteurs (24, 124, 150, 224) étant arrangés, à l'intérieur de ladite surface active (12, 34, 36, 152), en alternance entre lesdits premiers conducteurs électriques (22, 122, 122', 154), une première extrémité desdits éléments conducteurs étant reliée à une troisième borne (26) dudit dispositif de détection de la position d'action d'une force (8),
**caractérisé en ce que** lesdits éléments conducteurs (24, 124, 150, 224) sont configurés comme résistance ohmique s'étendant à travers la surface active (12, 34, 36, 152) du dispositif (8) et **en ce qu'**une deuxième extrémité desdits éléments conducteurs (24, 124, 150, 224) est reliée à une quatrième borne (30) dudit dispositif de détection de la position d'action d'une force (8).

2. Dispositif selon la revendication 1, dans lequel le premier substrat comprend une feuille de support élastique.

3. Dispositif selon la revendication 1, dans lequel le premier substrat comprend une plaque de circuit imprimé.

4. Dispositif selon l'une des revendications 1 à 3, dans lequel lesdits éléments conducteurs (24, 124, 150, 224) sont composés au même matériau que lesdits conducteurs électriques (22, 122, 122', 154).

5. Dispositif selon l'une des revendications 1 à 4, comprenant un deuxième substrat et une couche en matière résistive ou semi-conductrice appliquée sur ledit deuxième substrat, ledit deuxième substrat étant arrangé de telle manière par dessus le premier substrat que ladite couche de matière résistive ou semi-conductrice fait face auxdits conducteurs électriques (22, 122, 122', 154) et éléments conducteurs (24, 124, 150, 224) à l'intérieur de la surface active.

6. Dispositif selon la revendication 5, dans lequel ledit deuxième substrat comprend une feuille de support élastique.

7. Dispositif selon l'une des revendications 5 ou 6, comprenant une couche de répartition de la pression, ladite couche de répartition de la pression étant appliquée sur ledit deuxième substrat.

8. Dispositif d'entrée de données comprenant un dispositif de détection de position selon l'une des revendications précédentes.

## Claims

1. A device for detecting the action position of a force (8), comprising a first substrate,
a first ohmic resistor (10, 110, 210) applied to said substrate and extending along an active surface (12, 34, 36, 152) of said position detector, said first ohmic resistor (10, 110, 210) being connected between a first (14) and a second (16) terminal of said device for detecting the action position of a force (8),
a plurality of electrical conductors (22, 122, 122', 154), said electrical conductors (22, 122, 122', 154) being connected to the first ohmic resistor (10, 110, 210) at separate points thereof and said electrical conductors (22, 122, 122', 154) extending from the first ohmic resistor (10, 110, 210) within the active surface (12, 34, 36, 152), and a plurality of conductive elements (24, 124, 150, 224), said conductive elements (24, 124, 150, 224) being arranged, within said active surface (12, 34, 36, 152), alternately between said first electrical conductors (22, 122, 122", 154), a first end of said conductive elements being connected to a third terminal (26) of said device for detecting the action position of a force (8),
**characterised in that** said conductive elements (24, 124, 150, 224) are configured as ohmic resistors extending through the active surface (12, 34, 36, 152) of the device (8) and **in that** a second end of said conductive elements (24, 124, 150, 224) is connected to a fourth terminal (30) of said device for detecting the action position of a force (8)

2. A device according to claim 1, in which the first substrate comprises a resilient support sheet.

3. A device according to claim 1, in which the first substrate comprises a printed circuit board.

4. A device according to one of claims 1 to 3, in which said conductive elements (24, 124, 150, 224) are composed of the same material as said electrical conductors (22,122, 122', 154)

5. A device according to one of claims 1 to 4, comprising a second substrate and a layer of resistive or semiconductive material applied to said second substrate, said second substrate being arranged over the first substrate in such a way that said layer of resistive or semiconductive material faces said electrical conductors (22, 122, 122', 154) and conductive elements (24, 124, 150, 224) within the active surface

6. A device according to claim 5, in which the second substrate comprises a resilient support sheer.

7. A device according to one of claims 5 or 6, comprising a pressure distributing layer, said pressure distributing layer being applied to said second substrate

8. A data input device comprising a position detecting device according to one of the preceding claims.

## Patentansprüche

1. Vorrichtung zur Ermittlung der Wirkposition einer Kraft (8), mit
- einem ersten Substrat,
- einem ersten ohmschen Widerstand (10, 110, 210), der auf dem Substrat aufgebracht ist und sich entlang einer Wirkfläche (12, 34, 36, 152) des genannten Positionsdetektors erstreckt, wobei der erste ohmsche Widerstand (10, 110, 210) zwischen einer ersten (14) und einer zweiten (16) Klemme der Vorrichtung zur Ermittlung der Wirkposition einer Kraft (8) geschaltet ist,
- einer Vielzahl elektrischer Leiter (22, 122, 122', 154), wobei die elektrischen Leiter (22, 122, 122', 154) an zwei getrennten Stellen mit dem ersten ohmschen Widerstand (10, 110, 210) verbunden sind und die elektrischen Leiter (22, 122, 122', 154) sich von dem ersten ohmschen Wiederstand (10, 110, 210) in das Innere der Wirkfläche (12, 34, 36, 152) erstrecken, und
- einer Vielzahl leitender Elemente (24, 124, 150, 224), wobei die leitenden Elemente (24, 124, 150, 224) innerhalb der Wirkfläche (12, 34, 36, 152) abwechselnd zwischen den ersten elektrischen Leitern (22, 122, 122', 154) angeordnet sind, wobei ein erstes Ende der leitenden Elemente mit einer dritten Klemme (26) der Vorrichtung zur Ermittlung der Wirkposition einer Kraft (8) verbunden ist,
**dadurch gekennzeichnet, dass** die leitenden Elemente (24, 124, 150, 224) als ohmscher Widerstand ausgebildet sind, der sich durch die Wirkfläche (12, 34, 36, 152) der Vorrichtung (8) erstreckt, und dass ein zweites Ende der leitenden Elemente (24, 124, 150, 224) mit einer vierten Klemme (30) der Vorrichtung zur Ermittlung der Wirkposition einer Kraft (8) verbunden ist

2. Vorrichtung nach Anspruch 1, bei der das erste Substrat eine elastische Trägerfolie umfasst.

3. Vorrichtung nach Anspruch 1, bei der das erste Substrat eine Leiterplatte umfasst.

4. Vorrichtung nach einem der Ansprüche 1 bis 3, bei der die leitenden Elemente (24, 124, 150, 224) aus demselben Material wie die elektrischen Leiter (22, 122, 122', 154) bestehen.

5. Vorrichtung nach einem der Ansprüche 1 bis 4, umfassend ein zweites Substrat und eine Schicht aus einem resistiven oder halbleitenden Material, die auf dem zweiten Substrat aufgebracht ist, wobei das zweite Substrat über dem ersten Substrat derart angeordnet ist, dass die Schicht aus resistivem oder halbleitendem Material den elektrischen Leitern (22, 122, 122', 154) und den leitenden Elementen (24, 124, 150, 224) innerhalb der Wirkfläche gegenüberliegt

6. Vorrichtung nach Anspruch 5, bei der das zweite Substrat eine elastische Trägerfolie umfasst

7. Vorrichtung nach einem der Ansprüche 5 oder 6, umfassend eine Druckverteilungsschicht, wobei die Druckverteilungsschicht auf dem zweiten Substrat aufgebracht ist

8. Vorrichtung zur Dateneingabe mit einer Vorrichtung zur Positionsermittlung nach einem der vorstehenden Ansprüche
